# EUROPÄISCHE PATENTSCHRIFT

(11) **EP 0 623 047 B1**
(45) Veröffentlichungstag und Bekanntmachung des Hinweises auf die Patenterteilung: **06.11.1996**
(21) Anmeldenummer: 93919167.2
(22) Anmeldetag: 25.08.1993
(51) Int. Cl.: B01D 53/34

(54) **VERFAHREN ZUM REINIGEN EINES RAUCHGASSTROMES**
PROCESS FOR PURIFYING A CURRENT OF SMOKE GAS
PROCEDE DE PURIFICATION D'UN COURANT DE GAZ DE FUMEE

(30) Priorität: 04.11.1992 DE 4237230
(43) Veröffentlichungstag der Anmeldung: 09.11.1994
(73) Patentinhaber: DEUTSCHE BABCOCK ANLAGEN GMBH, 46049 Oberhausen (DE)
(72) Erfinder: AYDIN, Yüksel, D-47877 Willich (DE); MITTELBACH, Günther, D-58452 Witten (DE)
(74) Vertreter: Planker, Karl-Josef, Dipl.-Phys.
(86) Internationale Anmeldenummer: EP9302285
(87) Internationale Veröffentlichungsnummer: WO9409887

(56) Entgegenhaltungen:
- EP-A- 0 264 041
- EP-A- 0 309 742
- DE-A- 3 525 770
- DE-A- 3 526 756
- DE-A- 3 707 446

## Beschreibung

Die Erfindung betrifft ein Verfahren zum Reinigen eines Rauchgasstromes gemäß dem Oberbegriff des Patentanspruchs 1.

Bei der Reinigung von Rauchgasen oder anderen Abgasen, die Stickoxide enthalten, wird nahezu ausschließlich Ammoniak oder ein Ammoniak-Träger, wie z.B. Harnstoff, zur Stickoxidminderung eingesetzt. Eine für die technisch-wirtschaftliche Realisierung des Verfahrens erforderliche schnelle Reaktion des Ammoniaks mit dem Stickoxid wird bei niedrigen Temperaturen zwischen etwa 200 und 400 °C durch Einsatz eines Katalysators erreicht (SCR-Verfahren). Bei hohen Abgas-Temperaturen um 1.000 °C verläuft die Reaktion nicht katalytisch in der Gasphase (SNCR-Verfahren).

Insbesondere beim SNCR-Verfahren bleiben jedoch mehr oder weniger große Anteile an unreagiertem Ammoniak im Rauchgasstrom zurück.

Ammoniakreste im Abgas können auch beispielsweise durch nicht vollständige Verbrennung von Klärschlamm entstehen.

Unabhängig von der Ammoniakquelle erhebt sich dabei das Problem der Belastung der nachfolgenden Rauchgasreinigung mit diesem Spurenstoff. Es ist Vorsorge zu treffen, daß er nicht mit der Flugasche oder mit dem Abwasser in die Umwelt gelangt. Aus der DE-A-35 25 770 ist es bekannt, Rauchgas unter Zusatz von Ammoniak katalytisch zu entsticken und nach Abkühlung in einer Waschstufe zu reinigen. Aus der Waschstufe wird Abwasser entnommen welches neben Ammoniak noch Schwermetallsalze sowie hohe Konzentrationen von Kalziumsulfat und Kalziumchlorid enthält.

Nach Ausfällung der übrigen Verunreinigungen wird das ammoniakhaltige Wasser auf einen pH-Wert von 11 bis 12 gebracht und in einer Sprühturmanlage, in die heiße Luft eingeblasen wird, verdüst. Dadurch wird das Ammoniak bis auf eine umweltverträgliche Restkonzentration aus dem Abwasser entfernt. Das entgaste Abwasser wird in einen Vorfluter eingeleitet. Das ausgetriebene Ammoniak wird im Gemisch mit der wasserdampfgesättigten Treibluft zur Wiederverwendung in den Rauchgasstrom zurückgeführt.

Gemäß EP-A-0 264 041 wird ein Rauchgasstrom nach katalytischer oder nicht katalytischer Entstickung einer Naßwäsche unterworfen. Der pH-Wert des mit Ammoniak und Ammonium angereicherten Waschwassers wird auf mehr als 10 angehoben. Dann wird das Ammoniak durch in das Waschwasser eingeleitete Luft ausgetrieben. Bei dem Verfahren fällt ebenso wie bei dem zuerst erwähnten Verfahren Abwasser an. Um zu gewährleisten, daß der Ammoniakgehalt des Abwassers die zulässigen Grenzwerte nicht überschreitet, ist in beiden Fällen für die Austreibung des Ammoniaks ein hoher technischer Aufwand erforderlich.

Die bisher erwähnten Schriften lassen unerwähnt, daß ein erheblicher Teil des Ammoniaks, das nach der Entstickung im Rauchgas verbleibt, teils an der Oberfläche der mit dem Rauchgasstrom mitgeführten Flugaschepartikel adsorbiert wird, teils mit den im Rauchgas enthaltenen Spuren von sauren Gasen, wie Schwefeldioxid, Schwefeltrioxid und Chlorwasserstoff im Temperaturbereich zwischen etwa 130° und 230 °C Ammoniumsalze bildet, die mit der Flugasche abgeschieden werden. Der Gehalt der Flugasche an derartigen Ammoniakresten kann so hoch sein, daß die Flugasche weder einer Nutzung - z.B. als Zugschlagstoff in der Baustoffindustrie - zugeführt noch deponiert werden darf.

Die DE-A-35 26 756 befaßt sich mit dem Abtrennen von Ammoniakresten aus der Flugasche eines Rauchgases, dem zum Zweck der selektiven Reduktion seines Stickoxidgehaltes Ammoniak beigemischt worden ist. Die Flugasche wird in einer Wirbelschicht oder in einem turbulenten Drallstrom mit heißer Luft behandelt. Nach Abtrennen des Feststoffs wird die mit Ammoniak angereicherte Luft in den Rauchgasstrom zurückgeführt. Die Schrift befaßt sich aber nicht mit dem Ammoniak, welches nach Abscheidung der Flugasche als gasförmige Beimischung im Rauchgasstrom verbleibt.

Die Erfindung geht von einem Verfahren aus, welches in der EP-A-0 309 742 beschrieben ist, und zwar von den Verfahrensvarianten gemäß Figur 2 oder Figur 3. Bei diesen Verfahrensvarianten wird einem Rauchgasstrom innerhalb eines Kessels zwecks selektiver nicht katalytischer Reduktion der Stickoxide Ammoniak beigemischt. Das als Schlupf mitgeführte gasförmige Ammoniak wird nach trockener Abscheidung der Flugasche mit saurer Waschflüssigkeit ausgewaschen, so daß der aus dem Kamin in die Atmosphäre gelangende Rauchgasstrom praktisch frei von Ammoniak ist. Aus dem Kreislauf des Rauchgaswäschers abgezweigte ammoniumhaltige Waschflüssigkeit wird durch Zugabe einer basischen Substanz auf einen pH-Wert von mindestens 10, vorzugsweise über 10,5 gebracht. Bei diesem pH-Wert und einer Temperatur von mindestens 60 °C wird das Ammonium aus der Flüssigkeit in gasförmiges Ammoniak überführt und zur Entstickungsstufe rezirkuliert. Das so behandelte Waschwasser wird stromaufwärts von der Trockenabscheidung vollständig in den Rauchgasstrom eingesprüht und darin verdampft. Abwasser wird daher bei diesem Verfahren nicht nach außen abgegeben. Das hat den großen Vorteil, daß die Abtreibung des Ammoniaks aus dem Waschwasser mit geringem Aufwand durchgeführt werden kann. Denn ein etwaiger Rest von Ammoniak in dem rezirkulierten Waschwasser ist unschädlich, da er anschließend in der Naßwäsche wieder abgeschieden wird.

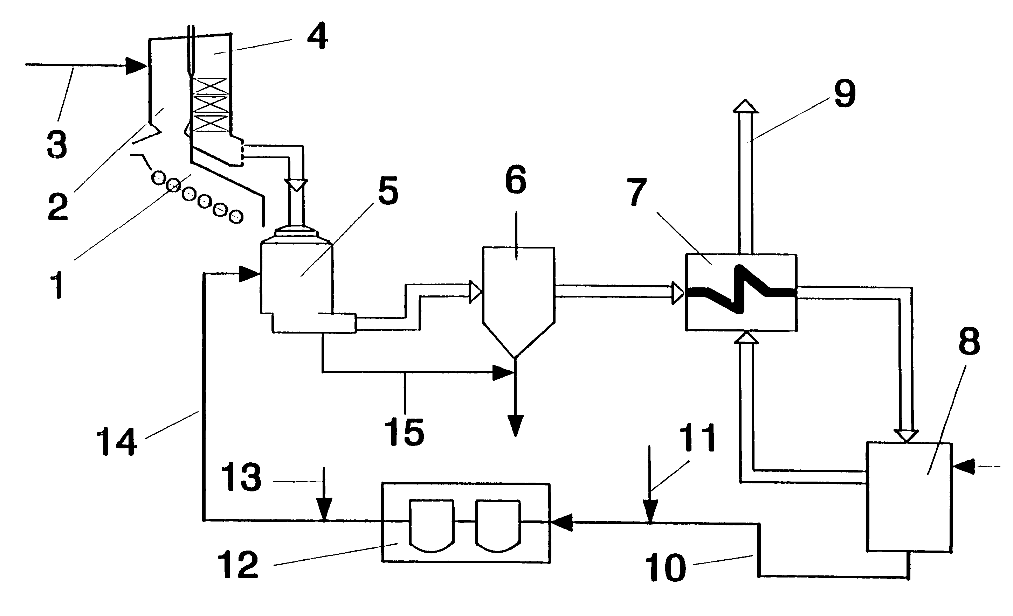

Die bei der Trockenabscheidung anfallende Flugasche wird einer direkten Erhitzung mit Heißgas oder einer indirekten Wärmebehandlung unterworfen, um die in ihr enthaltenen Ammoniumverbindungen auszutreiben. Bei einer anderen Verfahrensvariante (Figur 4) werden die Ammoniumverbindungen mit einer sauren wässrigen Flüssigkeit aus der Flugasche extrahiert. Das auf diese Weise wiedergewonnene Ammoniak wird ebenfalls zur Entstickung rezirkuliert.

Der Erfindung liegt die Aufgabe zugrunde, ein abwasserfrei arbeitendes Verfahren gemäß dem Oberbegriff des Patentanspruchs 1 zu schaffen, bei dem der Ammoniumgehalt der abgeschiedenen Flugasche so niedrig ist, daß die Flugasche ohne Nachbehandlung verwertbar oder deponierbar ist.

Diese Aufgabe wird gemäß der Erfindung durch das kennzeichnende Merkmal des Anspruchs 1 gelöst.

Die Wirkungsweise der Erfindung ist vor dem Hintergrund des Standes der Technik wie folgt zu verstehen: Bei dem Verfahren, von dem die Erfindung ausgeht, wird der pH-Wert der im Sprühtrockner gebildeten Tröpfchen durch Absorption saurer Schadgase bis in einen Bereich abgesenkt, in dem Ammoniak aus der Gasphase ausgewaschen wird. Dieses Ammoniak reagiert innerhalb des Tröpfchens mit der Säure zu Ammoniumverbindungen, die im Trockenabscheider als feste Salze mit der Flugasche abgeschieden werden und deren Ammoniumgehalt erhöhen. Bei dem erfindungsgemäßen Verfahren ist dagegen der pH-Wert, mit dem die Flüssigkeit in den Sprühtrockner gelangt, höher. Durch die absorbierten Säuren wird er nicht soweit abgesenkt, daß die Tröpfchen Ammoniak aus dem Gas aufnehmen. Daher unterbleibt die Neubildung von Ammoniumsalzen.

Die Zeichnung dient zur Erläuterung der Erfindung anhand einer schematisch dargestellten Anlage zur Durchführung des erfindungsgemäßen Verfahrens.

In einen Rauchgasstrom, der aus einer Walzenrostfeuerung 1 einer Müllverbrennungsanlage austritt, wird in einem ersten Kesselzug 2, wie durch den Pfeil 3 symbolisiert, im Temperaturbereich von rund 1.000 °C Ammoniak zwecks selektiver nicht katalytischer Entstickung eingedüst. In einem zweiten Kesselzug 4 wird der Rauchgasstrom weiter abgekühlt und anschließend einem Sprühtrockner 5 zugeführt. Von dort gelangt der konditionierte Rauchgasstrom mit einer Temperatur von rund 230 °C zu einem Trockenabscheider 6. Der von Flugasche befreite Rauchgasstrom wird über einen Wärmetauscher 7 einem Wäscher 8 zugeführt. Dort werden mit einer sauren wässrigen Waschflüssigkeit Schadgase, wie Chlorwasserstoff, Fluorwasserstoff und Ammoniak sowie ggfs. Schwermetallverbindungen ausgewaschen. Der Wäscher kann noch weitere Stufen, z.B. zur Auswaschung von Schwefeldioxid umfassen, die in der Zeichnung nicht dargestellt sind, da sie mit der Erfindung nicht in einem Wirkungszusammenhang stehen. Das gereinigte Gas gelangt über den Wärmetauscher 7, wo es durch das dem Wäscher 8 zuströmende Gas aufgewärmt wird, zu einem Kamin 9.

Aus dem Sumpf des Wäschers 8 wird über eine Leitung 10 Waschflüssigkeit abgezogen. Falls erforderlich, wird sie in einer oder mehreren nicht zur Erfindung gehörenden und daher in der Zeichnung nicht dargestellten Stufen von ausgefällten Reaktionsprodukten der abgeschiedenen Schadstoffe befreit. Das so erhaltene, ammoniakhaltige Wasser wird, wie durch den Pfeil 11 angedeutet, durch Zugabe von Alkali, wie z.B. Kalkmilch oder Natronlauge, auf einen pH-Wert von etwa 10,5 bis 11,5 gebracht und einem Strippapparat 12 zugeführt. Dort wird das gelöste Ammoniak zumindest teilweise in die Gasphase überführt und abgesaugt.

Die aus dem Strippapparat 12 austretende Waschflüssigkeit, welche noch geringe Mengen Ammoniak enthalten kann, wird durch Zugabe von Natronlauge gemäß Pfeil 13 auf einen pH-Wert von mehr als 12, vorzugsweise etwa 12,5 bis 13, gebracht, über eine Leitung 14 dem Sprühtrockner 5 zugeführt und dort in den Rauchgasstrom eingedüst, so daß sie völlig verdampft. Anstelle von Natronlauge kann auch eine andere Base eingesetzt werden. Die Zugabe kann auch schon vor dem Strippapparat 12 erfolgen. Durch den hohen pH-Wert der Flüssigkeit wird bereits im Sprühtrockner 5 der Chlorwasserstoffgehalt des Rauchgases um etwa 20 % gesenkt. Anfallender trockener Staub wird über ein Förderorgan 15 mit der aus dem Trockenabscheider abgezogenen Flugasche zusammengeführt. Der Gehalt des Trockenproduktes an Ammoniak und Ammoniumsalzen ist so gering, daß es ohne Weiterbehandlung z.B. als Baustoffzuschlag genutzt oder deponiert werden kann.

Die Wirkungsweise wird nun anhand folgender Beispiele erläutert:
Beispiel 1: In einer Anlage gemäß der Zeichnung wurde der Sprühtrockner außer Betrieb genommen, d.h. es wurde keine Flüssigkeit zugeführt. Der Trockenabscheider wurde mit einer Temperatur von 230 °C betrieben. Der Ammoniakgehalt des Rauchgases lag bei etwa 20 mg/m³. Der Ammoniumgehalt der Flugasche lag unter 50 mg/kg. Erklärung: Da im Sprühtrockner keine Ammoniumsalze gebildet wurden, blieb der Ammoniumgehalt der Flugasche sehr niedrig.
Beispiel 2: Im Sprühtrockner wurde reines Wasser (pH-Wert etwa 7) in das Rauchgas eingedüst, so daß durch Verdampfungskühlung wieder eine Temperatur von 230 °C am Trockenabscheider erreicht wurde. Der Ammoniumgehalt der Flugasche lag in diesem Fall weit oberhalb von 50 mg/kg. Erklärung: In diesem Falle wurde der pH-Wert der Tröpfchen durch absorbierte Säuren rasch abgesenkt, so daß Ammoniak aus der Gasphase aufgenommen wurde, welches mit den absorbierten Säuren zu Ammoniumsalzen reagierte.
Beispiel 3: Die Anlage wurde gemäß dem Stand der Technik betrieben, von dem die Erfindung ausgeht, d.h. der pH-Wert der Waschflüssigkeit wurde vor dem Strippapparat 12 auf etwa 11,5 eingestellt, und es wurde hinter dem Strippapparat kein zusätzliches Alkali eingespeist. Der Ammoniumgehalt der Flugasche lag bei etwa 1.000 mg/kg. Erklärung: Trotz des recht hohen pH-Wertes stellte sich qualitativ der gleiche Effekt ein wie bei Beispiel 2.
Beispiel 4: Die Anlage wurde gemäß der Erfindung betrieben. Der pH-Wert der zum Sprühtrockner 5 zurückgeführten Waschflüssigkeit wurde gemäß Pfeil 13 durch Zugabe von Natronlauge auf 12,5 erhöht. Der Ammoniumgehalt in der Flugasche fiel nach Inbetriebnahme der Zudosierung auf 50 bis 70 mg/kg ab, d.h. auf den Wert, der gemäß Beispiel 1 ohne Flüssigkeitszufuhr zum Sprühtrockner erreicht wird. Es wurde beobachtet, daß der Chlorwasserstoffgehalt des Rauchgases hinter dem Sprühtrockner um etwa 20 % abgesenkt war.

## Patentansprüche

1. Verfahren zum Reinigen eines Rauchgasstromes, der durch Ammoniak, saure Schadgase und Flugasche verunreinigt ist,
wobei der Rauchgasstrom in einem Sprühtrockener durch Einsprühen einer wässrigen Flüssigkeit konditioniert, an einer zweiten, stromabwärts gelegenen Stelle durch trockene Abscheidung von Flugstaub und an einer dritten, weiter stromabwärts gelegenen Stelle durch Waschen mit einem sauren wässrigen Medium von Ammoniak und weiteren Verunreinigungen, wie Chlorwasserstoff und Fluorwasserstoff, befreit wird
und wobei beim Waschen anfallende Waschflüssigkeit abgezogen, von Ammoniak zumindest teilweise befreit und anschließend im Sprühtrockener in den Rauchgasstrom eingesprüht und darin verdampft wird,
dadurch gekennzeichnet, daß die abgezogene Waschflüssigkeit vor dem Einsprühen in den Rauchgasstrom auf einen pH-Wert von 12 bis 13 gebracht wird, bei dem sie kein Ammoniak aus der Gasphase aufnimmt.

2. Verfahren nach Anspruch 1, dadurch gekennzeichnet, daß der pH-Wert der Waschflüssigkeit durch Zugabe von Natronlauge eingestellt wird.

## Claims

1. A process for cleaning a current of flue gas which is contaminated by ammonia, acid pollutant gases and flue dust,
wherein the current of flue gas is conditioned in a spray drier by an aqueous liquid being sprayed in, is freed of ammonia and further contaminants, such as hydrochloric acid and hydrofluoric acid, at a second point situated downstream by dry separation of flue dust and at a third point situated further downstream by washing with an aqueous acid medium,
and wherein washing liquid produced during the washing is drawn off, is freed of ammonia at least in part, and is then sprayed into the current of flue gas in the spray drier and is evaporated therein,
**characterized in that** before being sprayed into the current of flue gas the drawn-off washing liquid is set to a pH value of from 12 to 13, at which it does not absorb ammonia from the gas phase.

2. A process according to Claim 1, **characterized in that** the pH value of the washing liquid is set by adding caustic soda solution.

## Revendications

1. Procédé de purification d'un courant de gaz de fumée, qui est contaminé par de l'ammoniac, des gaz nocifs acides et des cendres volantes,
dans lequel le courant de gaz de fumée, conditionné dans un séchoir à pulvérisation par injection d'un liquide aqueux, est libéré des cendres volantes en un deuxième endroit situé en aval par séparation à sec et de l'ammoniac et d'autres impuretés, comme de l'acide chlorhydrique et de l'acide fluorhydrique, par lavage avec un milieu acide aqueux en un troisième endroit situé plus loin en aval, et
dans lequel du liquide de lavage obtenu lors du lavage est soutiré, au moins partiellement libéré d'ammoniac et ensuite injecté dans le courant de gaz de fumée dans le séchoir à pulvérisation et vaporisé à l'intérieur de celui-ci,
caractérisé en ce que le liquide de lavage soutiré est, avant l'injection dans le courant de gaz de fumée, amené à une valeur de pH de 12 à 13 à laquelle il n'absorbe pas d'ammoniac provenant de la phase gazeuse.

2. Procédé suivant la revendication 1, caractérisé en ce que la valeur de pH du liquide de lavage est ajustée par addition de lessive de soude.
